# EUROPEAN PATENT SPECIFICATION

(11) **EP 2 110 303 B1**
(45) Date of publication and mention of the grant of the patent: **08.07.2015**
(21) Application number: 09250890.2
(22) Date of filing: 27.03.2009
(51) Int. Cl.: B62M 7/02, F01P 11/04

(54) **Motorcycle**
Motorrad
Motocyclette

(30) Priority: 14.04.2008 JP 2008104246
(43) Date of publication of application: 21.10.2009
(73) Proprietor: Yamaha Hatsudoki Kabushiki Kaisha, Shizuoka-ken Shizuoka 438-8501 (JP)
(72) Inventor: Fujiwara, Hideki, Iwatai-shi Shizuoka-ken 438-8501 (JP)
(74) Representative: Moreland, David

(56) References cited:
- EP-A- 0 755 819
- EP-A- 0 953 499
- EP-A- 1 138 588
- EP-A2- 1 452 432
- JP-A- 2 211 321
- JP-A- H11 200 880
- JP-A- 2000 136 892
- JP-A- 2000 248 938
- JP-A- 2001 213 376
- JP-A- 2004 330 990
- JP-A- 2005 153 877

## Description

### FIELD OF THE INVENTION

The present invention relates to a motorcycle and particularly relates to a motorcycle including a radiator.

### BACKGROUND TO THE INVENTION

Water-cooled engines for motorcycles are known. Fig. 9 is a plan view of a cooling device of an engine disclosed by JP-A-2007-077908. The cooling device of the engine shown in Fig. 9 includes a radiator 101. A cooling liquid from the radiator 101 is supplied to the engine via a supply-side piping 103. The cooling liquid from the engine is returned to the radiator 101 via a return-side piping 104.

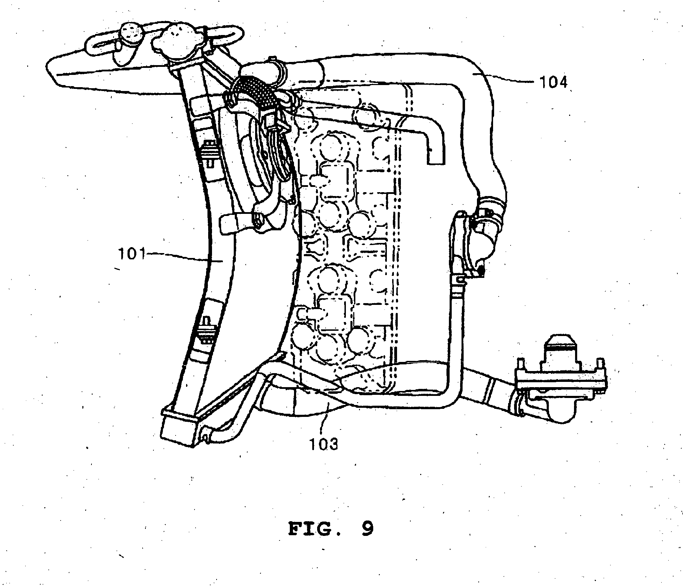

It is preferable that a piping connecting a radiator to an engine is short with views of improving cooling efficiency of the engine or the like. Due to this, as shown in Fig. 9, it is preferable that the supply-side piping 103 and the return-side piping 104 are arranged separately on both sides of the engine in a vehicle width direction, respectively.

Meanwhile, depending on specifications of a straddle-type vehicle, a generator is often connected to one end portion of a crankshaft. In such a case, it is often desired to mount an engine so that a center of the engine in the vehicle width direction is out of alignment with respect to a center of the vehicle in the vehicle width direction to keep an angle of a bank of the motorcycle great. Namely, it is often desired to mount the engine to be offset from a body frame in the vehicle width direction.

However, if the engine is mounted to be offset from the body frame toward one side in the vehicle width direction and the supply-side piping and the return-side piping are arranged on the both sides of the engine in the vehicle width direction, respectively, a vehicle width on one side in the vehicle width direction is disadvantageously large.

EP0755819, which considered as the closest prior art, describes a motorcycle having a water-cooled four-cycle single cylinder engine comprising a crankcase, a cylinder block with the cylinder tilted forward and a cylinder head. The radiator is disposed in the front part of the body frame and comprises a core section, tank sections placed on the right and left sides of the core section and an electric fan behind the core section. The radiator is located behind the tilted vehicle side portion of the right and left down tubes in the front part of a center tunnel. The lower end of the left tank section is connected to the front end of a cooling water supply hose. The rear end of the cooling water supply hose is connected to the section inlet of the cooling water pump. The rear end of a return hose is connected through a thermostat to a cooling water outlet formed at the top center of the cylinder head. The front end of the return hose is connected to the upper end of the right tank section.

### SUMMARY OF THE INVENTION

According to an aspect of the present invention there is provided a motorcycle comprising:
a body frame including a head pipe;
an engine attached to the body frame so that a center line of the engine in a vehicle width direction is out of alignment with respect to a center line of the head pipe in the vehicle width direction;
a radiator arranged in front of the engine, wherein the radiator is adapted to permit a cooling liquid to flow therethrough in the vehicle width direction between first and second end portions of the radiator;
a first piping connecting the first end portion of the radiator to the engine; and
a second piping connecting the second end portion of the radiator to the engine, wherein the second piping extends in the vehicle width direction in a space defined between the radiator and the engine and across the centre line of the head pipe.

The first and second end portions of the radiator may be located on opposite sides of the centre line of the head pipe.

The centre line of the head pipe defines the centre line of the vehicle.

The second piping may extend rearward from one side of the engine in a vehicle width direction. The second piping may extend generally from one side of the engine to the other side of the engine, extending across the centre line of the head pipe.

The centre line of the engine is arranged towards one side of the centre line of the head pipe in a vehicle width direction.

A highest portion of the second piping may be located laterally to the engine. The motorcycle may further include a bleeder piping. The bleeder piping may be connected to the highest portion of the second piping.

The engine includes a crankshaft and a generator may be provided in an end portion of the crankshaft.

The engine may include a body cylinder. A plurality of cylinders arranged in the vehicle width direction may be formed in the body cylinder.

The second piping may be substantially constituted by a resin piping.

The first piping may be substantially constituted by a resin piping.

The engine includes a crankcase and a cylinder member connected to the crankcase. The cylinder member extends obliquely upward toward a forward direction. At least a part of a portion of the second piping located between the radiator and the engine overlaps with the cylinder member in a plan view.

The motorcycle may further comprise a radiator fan attached to a rear surface of the radiator. The distance between the cylinder member and the radiator may narrow in an upward direction. An upper end portion of the cylinder member may be located in rear of the radiator fan. A portion of the second piping located between the radiator and the engine may be arranged at a position lower than the radiator fan.

A motorcycle according to the present invention includes a body frame, an engine, a radiator, a first piping and a second piping. The body frame includes a head pipe. The engine is attached to the body frame so that a center of the engine in a vehicle width direction is out of alignment with respect to a center of the head pipe in the vehicle width direction toward one side in the vehicle width direction. The radiator is arranged in front of the engine. A cooling liquid flows in the radiator in the vehicle width direction. The first piping extends rearward from the other end portion of the radiator. A rear end portion of the first piping is connected to the engine. The second piping connects one end portion of the radiator in the vehicle width direction to the engine. The second piping, the engine, the radiator and the first piping form a circulating circuit through which the cooling liquid circulates. The second piping extends from the one end portion of the radiator to the other side of the engine in the vehicle width direction via between the radiator and the engine, and is arranged to extend rearward of the other side of the engine in the vehicle width direction.

According to the present invention there is provided a motorcycle comprising:
a body frame including a head pipe;
an engine attached to the body frame so that a center of the engine in a vehicle width direction is out of alignment with respect to a center of the head pipe in the vehicle width direction toward one side in the vehicle width direction;
a radiator arranged in front of the engine, a cooling liquid flowing in the radiator in the vehicle width direction;
a first piping extending rearward from the other end portion of the radiator, and having a rear end portion connected to the engine; and
a second piping which connects one end portion of the radiator in the vehicle width direction to the engine and which, together with the second piping, the engine, the radiator, and the first piping, forms a circulating circuit through which the cooling liquid circulates,
wherein the second piping extends from the one end portion of the radiator to the other side of the engine in the vehicle width direction via between the radiator and the engine, and is arranged to extend rearward of the other side of the engine in the vehicle width direction.

According to the present invention, it is possible to suppress an increase in a vehicle width of a motorcycle including a radiator and having an engine offset.

### BRIEF DESCRIPTION OF THE DRAWINGS

These and other aspects of the present invention will now be described, by way of example only, with reference to the accompanying drawings, in which:
Fig. 1 is a left side view of a motorcycle according to a first embodiment of the present invention;
Fig. 2 is a left side view of an engine;
Fig. 3 is a plan view of the engine;
Fig. 4 is a schematic plan view of a radiator, a first piping and a second piping;

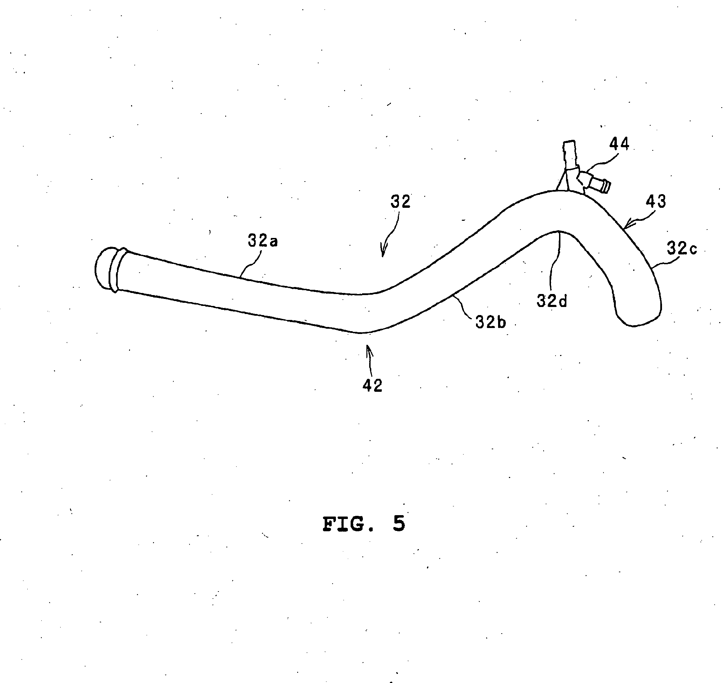

Fig. 5 is a schematic view of the second piping as viewed from a direction V shown in Fig. 4;
Fig. 6 is a circuit diagram for cooling water;
Fig. 7 is a schematic partial cross-sectional view for explaining an RFM formation method;
Fig. 8 is a schematic partial cross-sectional view for explaining the RFM formation method; and
Fig. 9 is a plan view of a cooling device of an engine disclosed by JP-A-2007-077908.

### DETAILED DESCRIPTION OF THE DRAWINGS

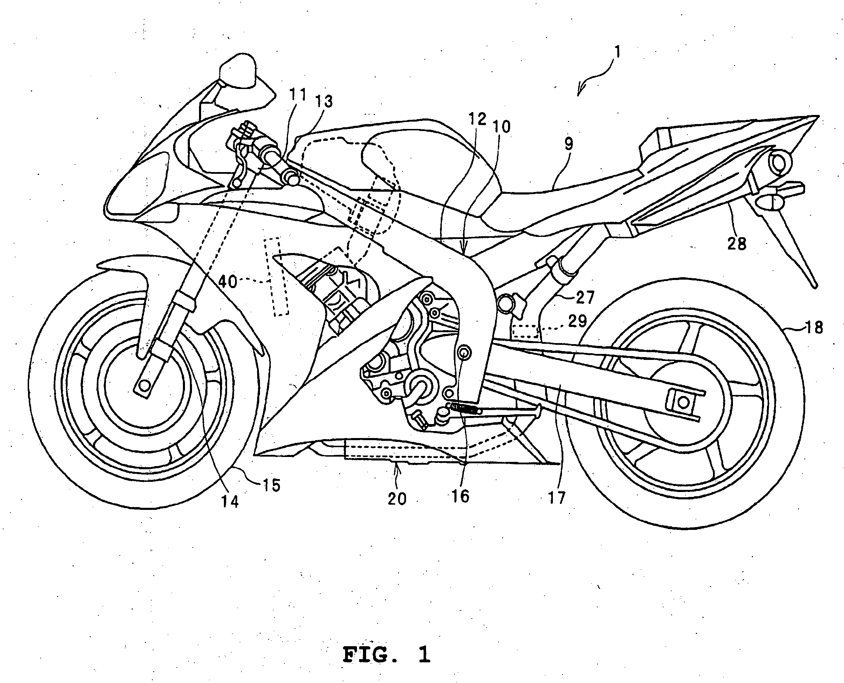

Embodiments of a preferred mode of a motorcycle for carrying out the present invention will be described hereinafter in detail while taking a motorcycle shown in Fig. 1 as an example. The embodiments are given only for illustrative purposes. The present invention is not limited to the following embodiments and modifications thereof.

The motorcycle according to the present invention is not limited to a motorcycle 1 in a narrow sense shown in Fig. 1. The motorcycle according to the present invention may be a motorcycle other than the motorcycle and a scooter in a narrow sense. Specifically, the motorcycle according to the present invention may be a moped, an off-road vehicle or the like.

In the present invention, examples of the motorcycle also include a vehicle having a front wheel and a rear wheel, at least one of which is constituted by a plurality of wheels, and changing a traveling direction by being tilted.

In the following description, it is assumed that front-back and left-right directions are directions viewed from a rider sitting upright on a seat 9.

Fig. 1 is a left side view of the motorcycle 1 according to a first embodiment of the present invention. As shown in Fig. 1, the motorcycle 1 includes a body frame 10. The body frame 10 includes a head pipe 11 and a main frame 12. The head pipe 11 is arranged in a front portion of the vehicle. The main frame 12 extends from the head pipe 11 obliquely rearward and downward.

A steering shaft (not shown) is rotatably inserted into the head pipe 11. A handle 13 and a pair of front forks 14 are connected to the steering shaft. A front wheel 15 is rotatably attached to lower end portions of the paired front forks 14.

A pivot shaft 16 is attached to a rear portion of the main frame 12. A rear arm 17 is pivotally attached to the pivot shaft 16. A rear wheel 18 is rotatably attached to a rear end portion of the rear arm 17.

Further, an engine 20 serving as a power source is suspended on the main frame 12. A radiator 40 is arranged in front of the engine 20. The radiator 40 is a so-called cross-flow-type radiator. The "cross-flow-type radiator" means a radiator in which a cooling liquid flows in the vehicle width direction. "Flowing in the vehicle width direction" means flowing from one side to the other side in the vehicle width direction in a plan view. In the present specification, "flowing in the vehicle width direction" includes flowing obliquely upward or obliquely downward from one side to the other side in the vehicle width direction. It is to be noted, however, that a so-called turn-flow-type radiator in which the cooling liquid flows from one side to the other side in the vehicle width direction and then flows back to the other side in the vehicle width direction is not included in the "cross-flow-type radiator".

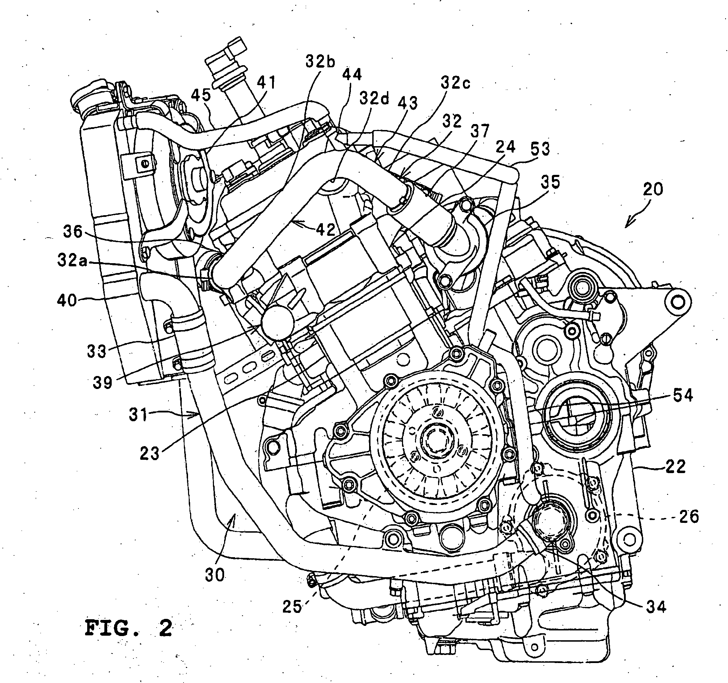

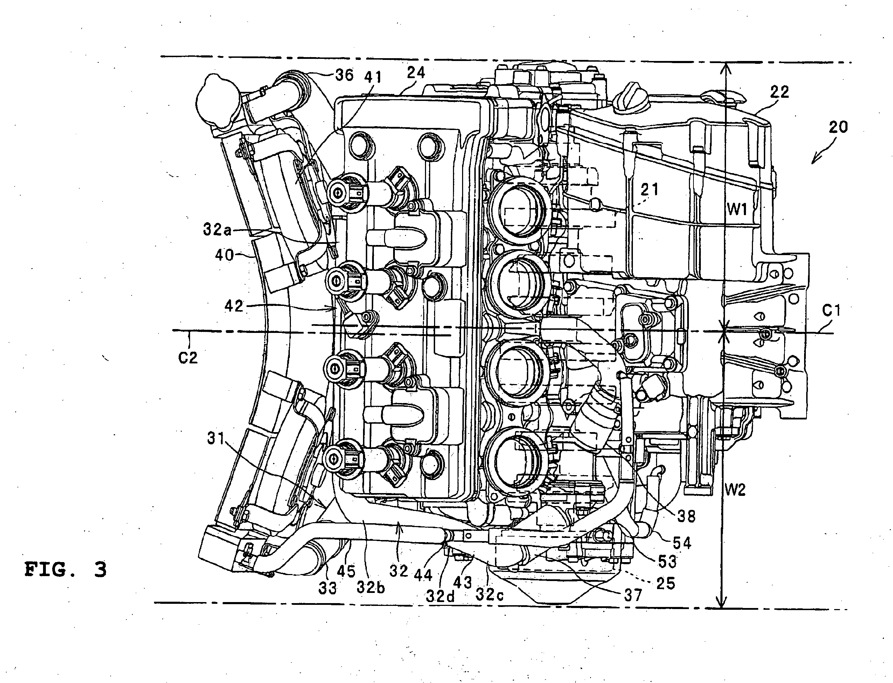

As shown in Figs. 2 and 3, a radiator fan 41 is arranged on a rear surface of the radiator 40. By arranging the radiator fan 41, cooling liquid cooling efficiency of the radiator 40 can be improved when, for example, the motorcycle 1 halts or when a speed of the motorcycle 1 is low.

The present embodiment will be described while taking an instance of using water as the cooling liquid as an example. However, in the present invention, the cooling liquid is not limited to water. The cooling liquid may be, for example, a liquid mixture of water and a liquid other than water. For example, the cooling liquid may be a liquid mixture of water and antifreeze. Furthermore, the cooling liquid may be a liquid in which one or a plurality of solutes is dissolved in one or a plurality of solvents.

In the present embodiment, the engine 20 is a water-cooled transverse four-cylinder engine. However, in the present invention, the type of the engine is not limited to a specific type as long as the engine is cooled using the cooling liquid. The engine may be, for example, a transverse two-cylinder engine, a transverse three-cylinder engine or a transverse five or more-cylinder engine. Furthermore, the engine may be, for example, a single-cylinder engine, an in-line multiple-cylinder engine, a horizontally-opposed multiple-cylinder engine or a V-type multiple-cylinder engine.

An exhaust pipe 27 is connected to the engine 20. An exhaust muffler 28 is connected to a distal end portion of the exhaust pipe 27. Exhaust gas purifying catalyst 29 is arranged within the exhaust pipe 27. Exhaust gas from the engine 20 is emitted into the external air via the exhaust pipe 27 and the exhaust muffler 28. The exhaust gas is purified by the exhaust gas purifying catalyst 29 arranged within the exhaust pipe 27. Specifically, concentrations of carbon monoxide and NOx in the exhaust gas are reduced.

It is to be noted that the type of the exhaust gas purifying catalyst 29 is not limited to a specific type. The exhaust gas purifying catalyst 29 may comprise a conventionally and normally used catalyst. Generally, the exhaust gas purifying catalyst 29 exhibits low catalytic activity at a normal temperature. Due to this, when the motorcycle 1 starts, the exhaust gas purifying catalyst 29 indicates low-activity catalyst. In a state in which the engine 20 is warmed up and the temperature of the exhaust gas purifying catalyst 29 rises, the exhaust gas purifying catalyst 29 exhibits high catalytic activity.

Referring mainly to Figs. 2 and 3, the engine 20 will be described in detail.

As shown in Fig. 3, the engine 20 includes a crankshaft 21. The crankshaft 21 is arranged so as to extend in the vehicle width direction. The crankshaft 21 is accommodated in a crankcase 22.

As shown in Fig. 2, a cylinder member 39 is attached to a first half part of the crankcase 22. The cylinder member 39 extends obliquely upward from the crankcase 22 toward a front direction. The cylinder member 39 extends in a direction proximate to the radiator 40. Specifically, the cylinder member 39 is arranged so that a distance between the radiator 40 and the cylinder member 39 narrows toward an upper position.

The cylinder member 39 includes a body cylinder 23 and a head cylinder 24. The body cylinder 23 is attached to the first half part of the crankcase 22. Further, the head cylinder 24 is attached to an upper portion of the body cylinder 23. The head cylinder 24 located in an upper end portion of the cylinder member 39 is located rearward of the radiator 40. An upper end portion of the head cylinder 24 is located rearward of a radiator fan 41 attached to a rear surface of the radiator 40.

Four cylinders, not shown, are formed in parallel in the body cylinder 23. A piston, not shown, is slidably and displaceably arranged in each of the cylinders. Each piston is connected to the crankshaft 21.

Moreover, as shown in Fig. 3, a generator 25 is arranged in a left end portion of the crankshaft 21. Rotation of the crankshaft 21 is transmitted to the generator 25. The generator 25 is thereby driven.

As shown in Fig. 2, a water pump 26 is arranged in the crankcase 22. The water pump 26 is arranged obliquely downward of the generator 25.

As shown in Fig. 3, a center axis C1 of the engine 20 in the vehicle width direction is located at a more rightward position in the vehicle width direction than a center axis C2 of the motorcycle 1 in the vehicle width direction. That is, in the present embodiment, the engine 20 is offset rightward in the vehicle width direction.

In this case, the "center axis of the engine in the vehicle width direction" is an axis passing a center between a center axis of an n^{th} cylinder and a center axis of an (n+1)^{th} cylinder from one side in the vehicle width direction and extending in the front-back direction if the number of cylinders arranged in the vehicle width direction is 2n (where n is a natural number). For example, in the present embodiment, as the engine 20 is a transverse four-cylinder engine, the center axis C1 passes a center in the vehicle width direction between a center axis of the second cylinder from the right in the vehicle width direction and the third cylinder from the right in the vehicle width direction and extends in the front-back direction. Further, the "center axis of the engine in the vehicle width direction" is an axis passing a center axis of an (m+1)^{th} cylinder from the right in the vehicle width direction and extending in the front-back direction if the number of cylinders arranged in the vehicle width direction is 2m+1 (where m is an integer equal to or greater than 0). Specifically, in case of a single-cylinder engine, the center axis of the engine in the vehicle width direction is an axis passing a center axis of a cylinder and extending in the front-back direction. In case of a three-cylinder engine, the center axis of the engine in the vehicle width direction is an axis passing a center axis of a cylinder located at a center and extending in the front-back direction.

Moreover, the "center axis of the straddle-type vehicle in the vehicle width direction" may be defined by an axis passing a center axis of a head pipe and extending in the front-back direction in a plan view. The center axis C2 in the present embodiment is an axis passing a center axis of the head pipe 11 shown in Fig. 1 and extending in the front-back direction.

As shown in Fig. 3, in the present embodiment, the generator 25 is arranged in the left end portion of the crankshaft 21. Due to this, a distance W2 from the center axis C1 of the engine 20 to a left end portion of the engine 20 is longer than a distance W1 from the center axis C1 of the engine 20 to a right end portion of the engine 20.

As shown in Fig. 3, the radiator 40 is arranged so that a center axis of the radiator 40 in the vehicle width direction is substantially identical in position to the center axis C2 of the motorcycle 1 in the vehicle width direction. Namely, the radiator 40 is substantially not offset in the vehicle width direction.

A right end of the engine 20 is substantially flush with a right end of the radiator 40 in the vehicle width direction. Further, a left end of the engine 20 is substantially flush with a left end of the radiator 40. More specifically, both ends of the radiator 40 are located slightly inward of those of the engine 20 in the vehicle width direction.

As shown in Figs. 2, 3 and 6, the engine 20 is connected to the radiator 40 by a first piping 31 and a second piping 32. The first piping 31 is connected to the left end portion of the radiator slightly below a central portion of the radiator 40 in a height direction. As shown in Fig. 2, the first piping 31 is connected to a lower portion of a second half part of the crankcase 22.

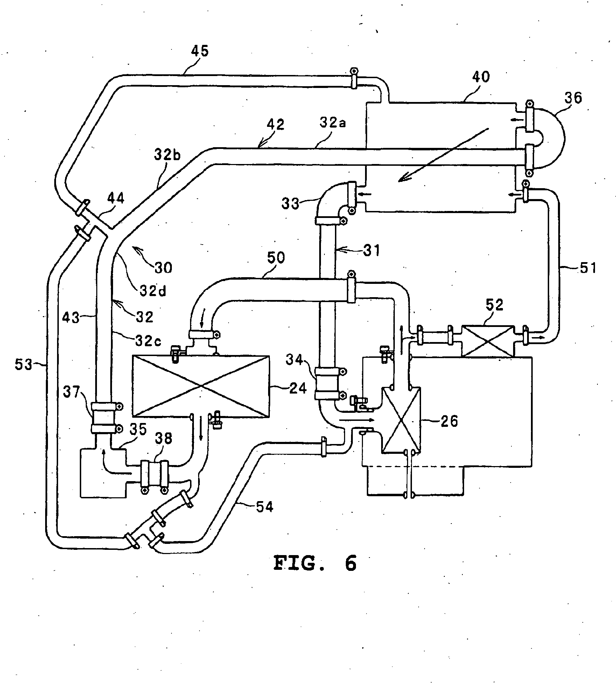

As shown in Fig. 3, the second piping 32 is connected to the right end portion of the radiator 40. The second piping 32 is connected to an upper end portion of the radiator 40. As shown in Figs. 2 and 6, the second piping 32 is connected to the head cylinder 24 via a thermostat 35.

As shown in Fig. 6, cooling water cooled in the radiator 40 is transferred to the engine 20 via the first piping 31. The cooling water transferred to the engine 20 circulates in the engine 20. The cooling water circulating in the engine 20 is transferred to the radiator 40 via the second piping 32. In this way, mainly the first piping 31, the second piping 32, the radiator 40 and the engine 20 form a circulating circuit 30 through which the cooling liquid circulates.

The first piping 31 and the second piping 32 may be directly connected to the engine 20 and the radiator 40, respectively. In another alternative, the first piping 31 and the second piping 32 may be connected to the engine 20 and the radiator 40 by, for example, joints, respectively.

Specifically, in the present embodiment, the first piping 31 is connected to the radiator 40 by a joint 33 as shown in Figs. 2 and 6. The first piping 31 is connected to the crankcase 22 by a joint 34.

As shown in Figs. 3 and 6, the second piping 32 is connected to the radiator 40 by a joint 36. As shown in Fig. 6, the second piping 32 is connected to the head cylinder 24 by a joint 37, the thermostat 35 and a joint 38. It is to be noted that Fig. 3 does not show the thermostat 35 for convenience of description.

In the preset embodiment, at least one of the first piping 31 and the second piping 32 is substantially constituted by a resin piping. Specifically, a longer piping out of the first piping 31 and the second piping 32, that is, at least the second piping 32 is substantially constituted by the resin piping. More specifically, both the first piping 31 and the second piping 32 are constituted by a resin piping formed integrally in the present embodiment.

The first piping 31 and the second piping 32 may be either formed integrally or formed by connecting a plurality of pipings, respectively. For example, each of the first piping 31 and the second piping 32 may be formed by connecting a plurality of resin pipings by resin, rubber or metal joints. Namely, in the present embodiment, the "piping is substantially constituted by the resin piping" encompasses that the piping is formed by a plurality of resin pipings and non-resin joints connecting the plurality of pipings.

As shown in Fig. 2, the first piping 31 extends obliquely rearward from the left end portion of the radiator 40 toward the left of the engine 20 downward. The first piping 31 is connected to the lower portion of the second half part of the crankcase 22 via below the generator 25.

As shown in Fig. 3, the second piping 32 extends from the right end portion of the radiator 40 substantially horizontally toward the left of the engine 20 via between the radiator 40 and the engine 20 in the front-back direction. The second piping 32 is bent rearward at the diagonally forward left of the engine 20. As shown in Figs. 2 and 3, the second piping 32 extends rearward at the left of the engine 20.

More specifically, as shown in Fig. 2, the second piping 32 includes a first piping section 32a, a second piping section 32b and a third piping section 32c. The first piping section 32a and the second piping section 32b constitute a radiator-side piping section 42. The third piping section 32c constitutes an engine-side piping section 43.

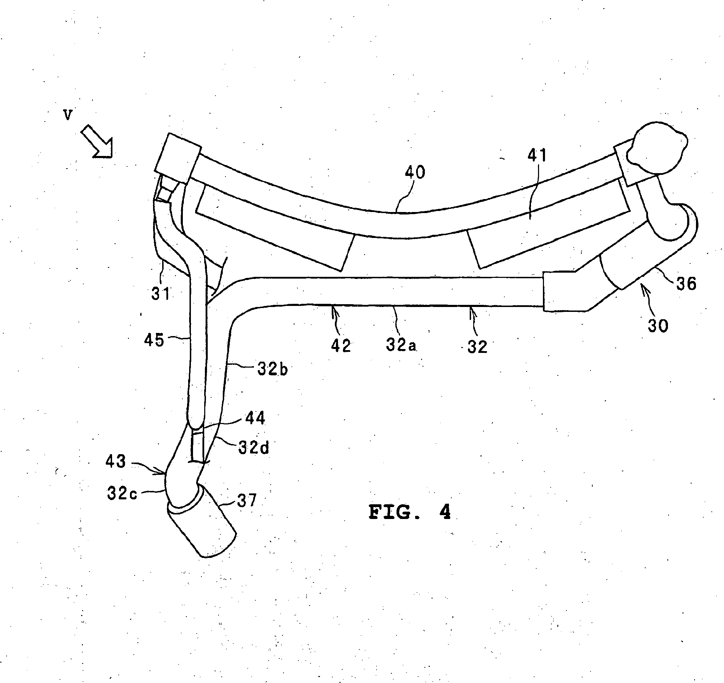

As shown in Fig. 4, the first piping section 32a is connected to the joint 36. A left end portion of the first piping section 32a is connected to the second piping section 32b. As shown in Fig. 2, the first piping section 32a extends substantially horizontally to the vehicle width direction between the radiator 40 and the engine 20. Specifically, the first piping section 32a is arranged between the head cylinder 24 and the radiator 40. The first piping section 32a is arranged at a position lower than the radiator fan 41. Further, as shown in Fig. 3, at least a part of the first piping section 32a overlaps with the cylinder member 39 in a plan view. Specifically, at least a part of the first piping section 32a overlaps with the head cylinder 24 in a plan view.

As shown in Fig. 2, the second piping section 32b extends from a connection section, in which the second piping section 32b is connected to the first piping section 32a, substantially linearly obliquely upward and rearward at the left of the engine 20. Due to this, the radiator-side piping section 42 is arranged so as to be higher from the radiator 40 side to the engine 20 side.

A rear end portion of the second piping section 32b is connected to the third piping section 32c serving as the engine-side piping section 43. A rear end portion of the third piping section 32c is connected to a joint 37. The third piping section 32c extends obliquely downward and rearward at the left of the engine 20. Due to this, a connection section, in which the third piping section 32c is connected to the second piping section 32b, is located at the highest position out of the second piping 32.

In this way, a connection section 32d in which the second piping section 32b is connected to the third piping section 32c is located at the highest position out of the second piping 32. A bleeder piping 45 is connected to this connection section 32d via a joint 44. Namely, the bleeder piping 45 is connected to the highest portion of the second piping 32. As shown in Figs. 2 and 3, a front end portion of the bleeder piping 45 is connected to the left end portion of the upper end portion of the radiator 40.

Referring mainly to Fig. 6, a configuration of the circulating circuit 30 through which the cooling water circulates will be described in more detail.

As shown in Fig. 6, a main circuit of the circulating circuit 30 is configured to include the water pump 26, a circulation path 50, the head cylinder 24, the second piping 32, the radiator 40 and the first piping 31 all of which are arranged in the engine 20.

The circulation path 50 connects the water pump 26 to the head cylinder 24. The cooling water pressured by the water pump 26 is transferred to a water jacket, not shown, formed in the head cylinder 24 via this circulation path 50. This cooling water cools the head cylinder 24.

It is to be noted that the circulation path 50 may be formed either within the engine 20 or by a piping arranged outside of the engine 20.

The cooling water from the head cylinder 24 is transferred to the radiator 40 via the thermostat 35 and the second piping 32. The cooling water is cooled in the radiator 40.

The cooling water from the radiator 40 is returned again to the water pump 26 via the first piping 31.

The water pump 26 and the radiator 40 are connected to each other also by a circulation path 51. An oil cooler 52 is arranged on the circulation path 51. By doing so, the cooling water is also supplied to the oil cooler 52. Therefore, the oil cooler 52 cools lubricating oil supplied to a slide section or the like of the engine 20.

A circulation path 53 connecting the head cylinder 24 to the joint 44 and a circulation path 54 connecting the head cylinder 24 to the water pump 26 are provided in the circulating circuit 30. If the thermostat 35 is closed, the cooling water from the head cylinder 24 flows into the second piping 32 through the joint 44 via this circulation path 53.

The joint 44 and the radiator 40 are connected to the radiator 40 by the bleeder piping 45. The air in the second piping 32 is emitted from the second piping 32 via this bleeder piping 45.

Meanwhile, considering cooling efficiency of the engine 20, it is preferable that the first piping 31 and the second piping 32 are as short as possible. Due to this, if the engine is offset toward one side in the vehicle width direction as described in the present embodiment, a turn-flow-type radiator is normally used as the radiator so that the first piping and the second piping are arranged on the other side of the engine in the vehicle width direction.

However, as a result of utmost study of the inventor of the present invention, it was found that the turn-flow-type radiator is lower in cooling efficiency than the cross-flow-type radiator. Due to this, even if the turn-flow-type radiator is used as the radiator and lengths of the first piping and the second piping are made small by arranging the first piping and the second piping on the other side of the engine in the vehicle width direction, it was found that the cooling liquid cooling efficiency cannot be improved due to deterioration in a cooling capability of the radiator itself. As a result, the inventor of the present invention reached a configuration, as shown in the present embodiment, in which the radiator 40 is the cross-flow-type radiator and that both the first piping 31 and the second piping 32 are arranged on one side of the engine 20 in the vehicle width direction. With this configuration, high overall cooling liquid cooling efficiency can be realized and the vehicle width of the motorcycle 1 can be suppressed.

Particularly in case of the transverse multiple-cylinder engine as shown in the present embodiment, a width of the engine tends to be large. Therefore, the configuration of the present embodiment is particularly effective for such an engine.

It is noted, however, that if the second piping 32 is led from one side to the other side in the vehicle width direction as shown in the present embodiment, the length of the second piping 32 becomes large. Due to this, if the second piping section is arranged so as to be monotonically higher or monotonically lower from, for example, a radiator 40 side to an engine 20 side, a tilt angle of the second piping section is small. Due to this, a problem occurs that the air tends to be accumulated in the second piping section.

To solve the problem, in the present embodiment, the second piping 32 is formed so that the connection section 32d in which the radiator-side piping section 42 is connected to the engine-side piping section 43 is the highest. The bleeder piping 45 is connected to the connection section 32d. Due to this, the air in the second piping 32 is gathered in the connection section 32d and efficiently emitted from the bleeder piping 45. According to the present embodiment, therefore, it is possible to suppress accumulation of the air in the second piping 32.

Moreover, in the present embodiment, the connection section 32d is arranged laterally to the engine 20. Due to this, the bleeder piping 45 can be arranged laterally to the engine 20. It is, therefore, possible to suppress positional interference among the bleeder piping 45, the radiator 40 and the cylinder member 39. As compared with, for example, an instance in which the connection section 32d and the bleeder piping 45 are arranged between the engine 20 and the radiator 40, the engine 20 and the radiator 40 can be made small in size as a whole.

Meanwhile, an iron piping is conventionally and mainly used as the piping connecting the engine to the radiator. In a state in which the engine is sufficiently warmed up, the temperature of the cooling liquid is relatively high. Generally, it is considered to efficiently cool this high-temperature cooling liquid by a small radiator. Namely, it is generally considered to improve cooling efficiency of the entire cooling liquid circulating circuit including the radiator. Due to this, it is generally considered that the piping connecting the engine to the radiator should preferably be a metal piping having high heat conductivity.

For example, if the piping connecting the engine to the radiator is a resin piping, a radiation amount from the cooling liquid in the piping is small. Accordingly, the cooling efficiency for cooling the cooling liquid tends to be deteriorated. Considering the cooling efficiency for cooling the cooling liquid, therefore, it is not always preferable to use the resin piping as the piping connecting the engine to the radiator.

Nevertheless, if an iron piping is used as the piping connecting the engine to the radiator, the cooling liquid warmed by the engine is cooled by the piping connecting the engine to the radiator during warming up of the engine. Due to this, time required to warm up the engine tends to be long.

In this case, as stated above, the exhaust gas purifying catalyst 29 exhibits only the low catalytic activity in the low temperature state. Due to this, the catalytic activity of the exhaust gas purifying catalyst 29 is relatively low during warming up of the engine. It is, therefore, difficult to reduce an emission of the exhaust gas lower in degree of purification than the exhaust gas in the state in which the engine is warmed up. Accordingly, it tends to be difficult to comply with the recent stricter emission control.

In the present embodiment, by contrast, at least one of the first piping 31 and the second piping 32 is constituted by the resin piping. Due to this, during warming up of the engine 20, it is possible to suppress reduction in temperature of the cooling liquid in the first piping 31 and the second piping 32. It is, therefore, possible to warm up the engine 20 relatively quickly. Accordingly, the emission of the exhaust gas which is emitted before the engine 20 is warmed up and which is lower in the degree of purification than the exhaust gas in the state in which the engine 20 is warmed up can be effectively reduced. This can facilitate complying with the recent stricter emission control.

In the present embodiment, at least the longer piping out of the first piping 31 and the second piping 32 is constituted by the resin piping. Due to this, it is possible to effectively suppress a reduction in the temperature of the cooling liquid in the first piping 31 and the second piping 32.

Particularly in the present embodiment, each of the first piping 31 and the second piping 32 is constituted by the resin piping. Due to this, it is possible to particularly effectively suppress the reduction in the temperature of the cooling liquid in the first piping 31 and the second piping 32.

Moreover, in the present embodiment, the radiator 40 is the so-called cross-flow-type radiator. Due to this, the cooling efficiency for cooling the cooling liquid is high in the radiator 40. It is, therefore, possible to attain high cooling efficiency for cooling the cooling liquid after the engine 20 is sufficiently warmed up.

In the present embodiment, the first piping section 32a is arranged to overlap with the cylinder member 39 in a plan view. Due to this, a front-back length of the engine 20 can be reduced. Furthermore, the first piping section 32a is arranged at the position lower than the radiator fan 41. Due to this, it is possible to suppress positional interference between the radiator fan 41 and the first piping section 32a. As a result, the radiator 40 and the engine 20 can be arranged proximately in the front-back direction. It is, therefore, possible to make the engine 20 and the radiator 40 small in size as a whole.

In the present embodiment, a method of manufacturing the resin piping is not limited to a specific method. The resin piping can be manufactured by, for example, a so-called RFM (RP TOPLA Floating core Molding) formation method disclosed in Japanese Patent No. 3771295 or the like.

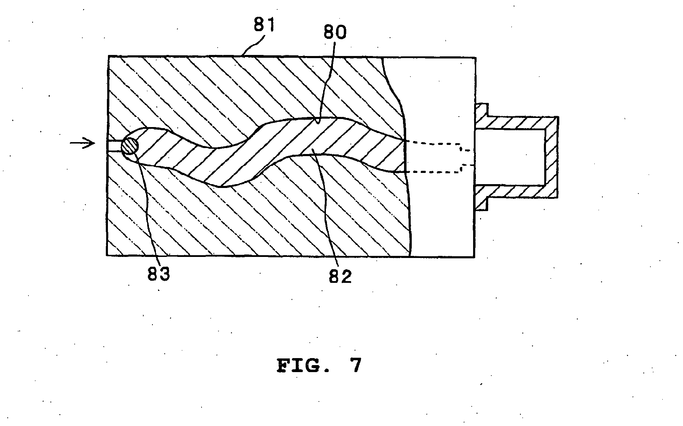

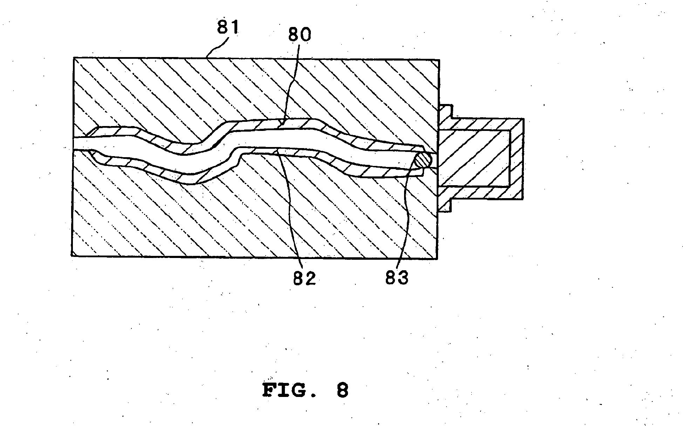

If the resin piping is to be manufactured by the RFM formation method, as shown in Fig. 7, a forming die 81 in which a formation space 80 substantially identical in external shape to the resin piping to be manufactured is formed is prepared. While the forming die 81 is kept at a predetermined temperature, molten resin 82 fills the formation space 80. As shown in Fig. 8, by applying gas pressure from a proximal end side of the formation space 80, a floating core 83 substantially identical in inside diameter to the resin piping to be manufactured is moved from the proximal end side to a distal end side of the formation space 80, whereby the resin piping substantially uniform in thickness can be manufactured.

The example embodiment has been described while referring to the instance in which each of both the first piping 31 and the second piping 32 is constituted by the resin piping. However, the first piping 31 and the second piping 32 may not be necessarily the resin piping. For example, a part of or a front portion of the relatively short first piping 31 may be made of metal. In addition, both of the first piping 31 and the second piping 32 may be made of metal.

### Description of Reference Numerals

- 1: Motorcycle
- 10: Body frame
- 11: Head pipe
- 20: Engine
- 21: Crankshaft
- 22: Crankcase
- 23: Body cylinder
- 25: Generator
- 31: First piping
- 32: Second piping
- 32d: Connection section
- 39: Cylinder member
- 40: Radiator
- 41: Radiator fan
- 42: Radiator-side piping section
- 43: Engine-side piping section
- 45: Bleeder piping

## Claims

1. A motorcycle (1) comprising:
a body frame (10) including a head pipe (11);
an engine (20) attached to the body frame (10);
a radiator (40) arranged in front of the engine (20), wherein the radiator (40) is adapted to permit a cooling liquid to flow therethrough in the vehicle width direction between first and second end portions of the radiator (40);
a first piping (31) connecting the first end portion of the radiator (40) to the engine (20); and
a second piping (32) connecting the second end portion of the radiator (40) to the engine (20), wherein the second piping (32) extends in the vehicle width direction between the radiator (40) and the engine (20) and across the centre line (C2) of the head pipe (11);
the first piping (31) transfers cooling liquid cooled in the radiator (40) to the engine (20), and the second piping (32) transfers cooling liquid circulating in the engine (20) to the radiator (40);
wherein in cases where the number of cylinders arranged in the vehicle width direction is 2n, where n is a natural number, the centre line (C1) of the engine (20) in the vehicle width direction is an axis passing a centre between a centre axis of an n^{th} cylinder and a centre axis of a (n+1)^{th} cylinder from one side in the vehicle width direction and extending in the front-back direction, and for engines (20) having an odd number of cylinders arranged in the vehicle width direction, the centre line (C1) of the engine in the vehicle width direction is an axis passing through a centre axis of a cylinder located at a centre of the engine and extending in the front-back direction; and
the engine (20) further includes:
a crankcase (22); and
a cylinder member (39) connected to the crankcase (22), and extending obliquely upward toward a forward direction; and **characterized in that**
a centre line (C1) of the engine (20), in a vehicle width direction is out of alignment with respect to a centre line (C2) of the head pipe (11) in the vehicle width direction; and
at least a part of a portion (32a) of the second piping (32) located between the radiator (40) and the engine (20) overlaps with the cylinder member (39) in a plan view.

2. The motorcycle (1) according to claim 1, wherein the second piping (32) extends rearward from one side of the engine (20) in a vehicle width direction.

3. The motorcycle (1) according to claim 1 or 2, wherein a highest portion (32d) of the second piping (32) is located laterally to the engine (20), and the motorcycle (1) further includes a bleeder piping (45) connected to the highest portion (32d) of the second piping (32).

4. The motorcycle (1) according to any preceding claim, wherein the engine (20) includes:
a crankshaft (21); and
a generator (25) provided in an end portion of the crankshaft (21).

5. The motorcycle (1) according to any preceding claim, wherein the engine (20) includes a body cylinder (23), a plurality of cylinders arranged in the vehicle width direction being formed in the body cylinder (23).

6. The motorcycle (1) according to any preceding claim, wherein the second piping (32) is substantially constituted by a resin piping.

7. The motorcycle (1) according to any preceding claim, wherein the first piping (31) is substantially constituted by a resin piping.

8. The motorcycle (1) according to any preceding claim, further comprising:
a radiator fan (41) attached to a rear surface of the radiator (40),
whereby a distance between the cylinder member (39) and the radiator (40) narrows in an upward direction,
an upper end portion of the cylinder member (39) is located in rear of the radiator fan (41), and
a portion of the second piping (32) located between the radiator (40) and the engine (20) is arranged at a position lower than the radiator fan (41).

## Patentansprüche

1. Motorrad (1), das Folgendes umfasst:
einen Aufbaurahmen (10), der ein Kopfrohr (11) einschließt,
einen Motor (20), der an dem Aufbaurahmen (10) befestigt ist,
einen Kühler (40), der vor dem Motor (20) angeordnet ist, wobei der Kühler (40) dafür eingerichtet ist, zu ermöglichen, dass eine Kühlflüssigkeit in der Fahrzeugbreitenrichtung zwischen einem ersten und einem zweiten Endabschnitt des Kühlers (40) durch denselben strömt,
eine erste Rohrleitung (31), die den ersten Endabschnitt des Kühlers (40) mit dem Motor (20) verbindet, und
eine zweite Rohrleitung (32), die den zweiten Endabschnitt des Kühlers (40) mit dem Motor (20) verbindet, wobei sich die zweite Rohrleitung (32) in der Fahrzeugbreitenrichtung zwischen dem Kühler (40) und dem Motor (20) und über die Mittellinie (C2) des Kopfrohres (11) erstreckt,
wobei die erste Rohrleitung (31) in dem Kühler (40) gekühlte Kühlflüssigkeit zu dem Motor (20) weiterleitet und die zweite Rohrleitung (32) in dem Motor (20) umlaufende Kühlflüssigkeit zu dem Kühler (40) weiterleitet,
wobei in Fällen, in denen die Anzahl der in der Fahrzeugbreitenrichtung angeordneten Zylinder 2n ist, wobei n eine natürliche Zahl ist, die Mittellinie (C1) des Motors (20) in der Fahrzeugbreitenrichtung eine Achse ist, die eine Mitte zwischen einer Mittelachse eines n-ten Zylinders und einer Mittelachse eines (n+1)-ten Zylinders von einer Seite in der Fahrzeugbreitenrichtung passiert und sich in der Richtung von vorn nach hinten erstreckt, und für Motoren (20), die eine ungerade Anzahl von in der Fahrzeugbreitenrichtung angeordneten Zylindern haben, die Mittellinie (C1) des Motors in der Fahrzeugbreitenrichtung eine Achse ist, die durch eine Mittelachse eines an einer Mitte des Motors angeordneten Zylinders hindurchgeht und sich in der Richtung von vorn nach hinten erstreckt, und
wobei der Motor (20) ferner Folgendes einschließt:
ein Kurbelgehäuse (22) und
ein Zylinderelement (39), das mit dem Kurbelgehäuse (22) verbunden ist und sich schräg nach oben zu einer Vorwärtsrichtung hin erstreckt, und **dadurch gekennzeichnet, dass**
eine Mittellinie (C1) des Motors (20) in einer Fahrzeugbreitenrichtung außer Ausrichtung in Bezug auf eine Mittellinie (C2) des Kopfrohres (11) in der Fahrzeugbreitenrichtung ist und
wenigstens ein Teil eines Abschnitts (32a) der zweiten Rohrleitung (32), der zwischen dem Kühler (40) und dem Motor (20) angeordnet ist, sich in einer Draufsicht mit dem Zylinderelement (39) überlappt.

2. Motorrad (1) nach Anspruch 1, wobei sich die zweite Rohrleitung (32) von einer Seite des Motors (20) in der Fahrzeugbreitenrichtung aus nach hinten erstreckt.

3. Motorrad (1) nach Anspruch 1 oder 2, wobei ein höchster Abschnitt (32d) der zweiten Rohrleitung (32) seitlich zu dem Motor (20) angeordnet ist und das Motorrad (1) ferner eine Ableitungsrohrleitung (45) einschließt, die mit dem höchsten Abschnitt (32d) der zweiten Rohrleitung (32) verbunden ist.

4. Motorrad (1) nach einem der vorhergehenden Ansprüche, wobei der Motor (20) Folgendes einschließt:
eine Kurbelwelle (21) und
eine Lichtmaschine (25), die in einem Endabschnitt der Kurbelwelle (21) bereitgestellt wird.

5. Motorrad (1) nach einem der vorhergehenden Ansprüche, wobei der Motor (20) einen Gehäusezylinder (23) einschließt, wobei mehrere in der Fahrzeugbreitenrichtung angeordnete Zylinder in dem Gehäusezylinder (23) geformt sind.

6. Motorrad (1) nach einem der vorhergehenden Ansprüche, wobei die zweite Rohrleitung (32) im Wesentlichen aus einer Harz-Rohrleitung besteht.

7. Motorrad (1) nach einem der vorhergehenden Ansprüche, wobei die erste Rohrleitung (31) im Wesentlichen aus einer Harz-Rohrleitung besteht.

8. Motorrad (1) nach einem der vorhergehenden Ansprüche, das ferner Folgendes umfasst:
einen Kühlerlüfter (41), der an einer hinteren Fläche des Kühlers (40) befestigt ist,
wodurch ein Abstand zwischen dem Zylinderelement (39) und dem Kühler (40) in einer Aufwärtsrichtung schmaler wird,
wobei ein oberer Endabschnitt des Kühlerelements (39) hinter dem Kühlerlüfter (41) angeordnet ist und
wobei ein Abschnitt der zweiten Rohrleitung (32), der zwischen dem Kühler (40) und dem Motor (20) angeordnet ist, bei einer Position, niedriger als der Kühlerlüfter (41), angeordnet ist.

## Revendications

1. Motocycle (1), comprenant :
une ossature de carrosserie (10) englobant un tube de tête (11);
un moteur (20) fixé sur l'ossature de carrosserie (10) ;
un radiateur (40), agencé devant le moteur (20), dans lequel le radiateur (40) est adapté pour permettre l'écoulement d'un liquide de refroidissement dans la direction de la larguer du véhicule, entre des première et deuxième parties d'extrémité du radiateur ;
une première tuyauterie (31), connectant la première partie d'extrémité du radiateur (40) au moteur (20) ; et
une deuxième tuyauterie (32), connectant la deuxième partie d'extrémité du radiateur (40) au moteur (20), la deuxième tuyauterie (32) s'étendant dans la direction de la largeur du véhicule entre le radiateur (40) et le moteur (20) et à travers la ligne médiane (C2) du tube de tête (11) ;
la première tuyauterie (31) transférant le liquide de refroidissement refroidi dans le radiateur (40) vers le moteur (20), et la deuxième tuyauterie (32) transférant le liquide de refroidissement circulant dans le moteur (20) vers le radiateur (40) ;
dans lequel, dans des cas où le nombre de cylindres agencés dans la direction de la largeur du véhicule correspond à 2n, n étant un nombre naturel, la ligne médiane (C1) du moteur (20), dans la direction de la largeur du véhicule, est un axe passant par un centre entre un axe central d'un n^{ième} cylindre et un axe central d'un (n+1)^{nième} cylindre, à partir d'un côté dans la direction de la largeur du véhicule, et s'étendant dans la direction allant de l'avant vers l'arrière, et pour les moteurs (20) comportant un nombre impair de cylindres agencés dans la direction de la largeur du véhicule, la ligne médiane (C1) du moteur dans la direction de la largeur du véhicule est un axe passant à travers un axe central d'un cylindre agencé au niveau d'un centre du moteur et s'étendant dans la direction allant de l'avant vers l'arrière ; et
le moteur (20) englobant en outre :
un carter (22) ; et
un élément de cylindre (39), connecté au carter (22) et s'étendant de manière oblique vers le haut, dans une direction allant vers l'avant ; et **caractérisé en ce que**
une ligne médiane (C1) du moteur (20), dans une direction de la largeur du véhicule, est désalignée par rapport à une ligne médiane (C2) du tuyau de tête (11), dans la direction de la largeur du véhicule ; et
au moins une partie d'une partie (32a) de la deuxième tuyauterie (32) agencée entre le radiateur (40) et le moteur (20) chevauche l'élément de cylindre (39) dans une vue en plan.

2. Motocycle (1) selon la revendication 1, dans lequel la deuxième tuyauterie (32) s'étend vers l'arrière à partir d'un côté du moteur (20), dans la direction de la largeur d'un véhicule.

3. Motocycle (1) selon les revendications 1 ou 2, dans lequel la partie la plus haute (32d) de la deuxième tuyauterie (32) est agencée de manière latérale par rapport au moteur (20), le motocycle (1) englobant en outre une tuyauterie de purge (45) connectée à la partie la plus haute (32d) de la deuxième tuyauterie (32).

4. Motocycle (1) selon l'une quelconque des revendications précédentes, dans lequel le moteur (20) englobe :
un carter (21) ; et
un générateur (25), agencé dans une partie d'extrémité du carter (21).

5. Motocycle (1) selon l'une quelconque des revendications précédentes, dans lequel le moteur (20) englobe un cylindre de corps (23), plusieurs cylindres agencés dans la direction de la largeur du véhicule étant formés dans le cylindre de corps (23).

6. Motocycle (1) selon l'une quelconque des revendications précédentes, dans lequel la deuxième tuyauterie (32) est essentiellement constituée par une tuyauterie de résine.

7. Motocycle (1) selon l'une quelconque des revendications précédentes, dans lequel la première tuyauterie (31) est essentiellement constituée par une tuyauterie de résine.

8. Motocycle (1) selon l'une quelconque des revendications précédentes, comprenant en outre :
un ventilateur de radiateur (41), fixé sur une surface arrière du radiateur (40) ;
une distance entre l'élément de cylindre (39) et le radiateur (40) étant ainsi rétrécie dans une direction allant vers le haut :
une partie d'extrémité supérieure de l'élément de cylindre (39) étant agencée dans la partie arrière du ventilateur du radiateur (41) ; et
une partie de la deuxième tuyauterie (32), agencée entre le radiateur (40) et le moteur (20), étant agencée au niveau d'une position plus basse que le ventilateur du radiateur (41).
